# EUROPÄISCHE PATENTSCHRIFT

(11) **EP 3 417 711 B1**
(45) Veröffentlichungstag und Bekanntmachung des Hinweises auf die Patenterteilung: **22.09.2021**
(21) Anmeldenummer: 18178791.2
(22) Anmeldetag: 20.06.2018
(51) Int. Cl.: A21C 3/02, A21C 11/10

(54) **Teigverarbeitungsvorrichtung**
DOUGH PROCESSING DEVICE
DISPOSITIF DE PREPARATION DE PATE

(30) Priorität: 20.06.2017 DE 102017113602; 03.05.2018 DE 202018102458 U
(43) Veröffentlichungstag der Anmeldung: 26.12.2018
(73) Patentinhaber: Koplar, Richard, 86911 Dießen am Ammersee (DE)
(72) Erfinder: Koplar, Richard, 86911 Dießen am Ammersee (DE)
(74) Vertreter: Knöner, Gregor

(56) Entgegenhaltungen:
- CN-A- 104 543 766
- DE-A1- 2 634 377
- US-A- 4 348 166
- US-A- 4 405 298
- US-A1- 2004 142 062

## Beschreibung

### Gebiet der Erfindung

Die vorliegende Erfindung betrifft eine Teigverarbeitungsvorrichtung zur Verarbeitung eines Teiges, insbesondere zum Ausrollen und Schneiden des Teiges. Des Weiteren betrifft die Erfindung ein Verfahren zur Verarbeitung eines Teiges mit einer derartigen Vorrichtung.

### Hintergrund der Erfindung

In der Backwarenindustrie sind Ausrollmaschinen bekannt, mit denen ein Teig ausgerollt werden kann. Diese weisen meist ein horizontal laufendes Förderband zum Zuführen eines Teiges, zwei vertikal übereinander angeordnete Rollen zum Ausrollen des Teiges sowie ein weiteres Förderband zum weiteren Transport des ausgerollten Teiges auf. Derartige Maschinen sind beispielsweise für eine fortlaufende Produktion und das Ausrollen größerer Teigmengen geeignet. Die weitere Verarbeitung eines derart ausgerollten Teiges kann manuell erfolgen.

Derartige Maschinen weisen den Nachteil auf, dass sie eine große Standfläche benötigen und mit hohen Anschaffungskosten verbunden sind. Des Weiteren müssen weitere Verarbeitungsschritte in der Regel manuell durchgeführt werden.

Es ist wünschenswert, eine Teigverarbeitungsmaschine bereitzustellen, die kompakt ist und deren Anschaffungskosten relativ niedrig sind. Des Weiteren ist es wünschenswert, eine Teigverarbeitungsmaschine bereitzustellen, die eine möglichst effektive und mit wenig manuellem Aufwand verbundene Verarbeitung eines Teiges ermöglicht. Insbesondere bei der Herstellung von sogenannten Baumstriezeln sind beispielsweise mehrere manuelle Arbeitsschritte zur Verarbeitung des Teiges notwendig, so dass deren Herstellung aufwendig und kostenintensiv ist. Es ist wünschenswert, die Herstellung derartiger Gebäcke zu vereinfachen.

Die Druckschrift DE 43 38 232 C2 offenbart eine Vorrichtung zur Verarbeitung eines zu einem Stapel aufgeschichteten Teigbandes, bei der eine Teigmasse durch eine Walzvorrichtung zu einem Teigband ausgerollt wird. Nach einem mäanderförmigen Aufschichten des Teigbands zu einem Stapel wird dieser Stapel durch einen Vorschub einer Trenneinrichtung zugeführt. Die Vorrichtung umfasst somit separate nebeneinander angeordnete Vorrichtungen, die verschiedene Verarbeitungsschritte vornehmen, so dass die Vorrichtung komplex und kostenintensiv ist sowie eine große Grundfläche zum Aufstellen benötigt.

Die Druckschrift EP 1 338 201 A1 offenbart eine Teigbearbeitungsmaschine, bei der Teigmaterial von einer Teigrolle abgewickelt und anschließend geschnitten wird. Eine solche Vorrichtung benötigt vorgefertigte Teigrollen zur weiteren Verarbeitung.

Die Druckschrift DE 455 982 A beschreibt eine Teigteilmaschine, mit der Teigfladen durch Schneiden portioniert werden, wobei abgeschnittene Teigstücke auf Gärbretter fallen. Die Teigstücke werden anschließend der nächsten Bearbeitungsstelle zugeführt, insbesondere einer Wirkvorrichtung, in der der Teig gewirkt (d.h. geknetet und in Form gebracht) wird. Der Teig wird danach auf den Brettern in Gärräume gebracht, in denen der Teig gären kann. Die Vorrichtung dient somit der Herstellung des Teiges und nicht dessen Verarbeitung.

Die Druckschrift CN 10 45 43766 A zeigt eine Vorrichtung zur Herstellung von Nudeln. Mehrere gegenläufige Walzenpaare sind vertikal übereinander angeordnet, um Nudelteig zwischen den Walzen auszurollen. Nach den Walzenpaaren zum Ausrollen des Teigs ist ein Schneidwalzenpaar angeordnet. Jede Schneidwalze weist umlaufende Schneidelemente auf, die jeweils mit der anderen Schneidwalze zusammenwirken, um den zwischen den Schneidwalzen geführten Teig in Streifen zu schneiden. Um die Teigdicke einzustellen ist der Abstand zwischen dem letzten Walzenpaar vor den Schneidwalzen variabel einstellbar. Dazu ist eine parallel zu einer Walze angeordnete Stange vorgesehen mit der die Walze so positioniert werden kann, dass ein gewünschter Abstand zur benachbarten Walze bereitgestellt wird.

Druckschrift US 2004/014062 A1 zeigt eine Vorrichtung zum Ausrollen von Teig mit Walzen, wobei ein Teil des Teigs von einer Walze mittels mehrerer Schaber abgelöst bzw. abgeschabt wird. Auf der Walze verbleibender (überschüssiger) Teig wird wieder zurückgeführt, um wieder ausgewalzt zu werden.

DE 26 34 377 A1 zeigt eine Teigteil- und Wirkmaschine zum Schneiden und Ausrollen von Teig. Teig wird durch drei gegenläufige Walzenpaare zu einer Teigbahn geformt und einer Rillenwalze mit mehreren Ringschneiden zugeführt, um den Teig in Streifen zu schneiden. Eine endgültige Vereinzelung der Teigstränge wird durch eine Druckwalze bewirkt, die mit ihrer glatten Mantelfläche an den Schneidkanten der Ringschneiden anliegt

### Zusammenfassung der Erfindung

Dementsprechend ist es eine Aufgabe der vorliegenden Erfindung, die vorab genannten Nachteile zumindest teilweise zu vermeiden und eine kompakte Teigverarbeitungsmaschine bereitzustellen, mit der eine effektive Verarbeitung eines Teiges ermöglicht wird.

Diese Aufgabe wird mit Hilfe der Merkmale der unabhängigen Ansprüche gelöst. In den abhängigen Ansprüchen sind bevorzugte Ausführungsformen der Erfindung beschrieben.

Gemäß einem Aspekt der vorliegenden Erfindung wird eine Teigverarbeitungsvorrichtung bereitgestellt, die eine Ausrolleinrichtung zum Ausrollen eines Teiges, der der Ausrolleinrichtung zuführbar ist, umfasst. Die Teigverarbeitungsvorrichtung kann des Weiteren eine Schneidvorrichtung zum Schneiden des Teiges umfassen, wobei die Schneidvorrichtung in die Ausrolleinrichtung integriert ist. Die Schneidvorrichtung weist mehrere Schneidelemente auf, die derart voneinander beabstandet angeordnet sind, dass der Teig bei Förderung des Teigs durch die Ausrolleinrichtung in Förderrichtung (d. h. im Wesentlichen parallel zur Förderrichtung) in Streifen geschnitten wird.

Die Ausrolleinrichtung weist mindestens zwei Paare von Ausrollwalzen auf, die der Teig während der Verarbeitung nacheinander durchläuft und die den Teig in einer Förderrichtung fördern. Der Umfang der Ausrollwalzen und/oder ein Antrieb, der die Ausrollwalzen antreibt, sind bzw. ist derart ausgestaltet, dass ein in Förderrichtung des Teigs nachfolgendes Paar von Ausrollwalzen eine höhere Fördergeschwindigkeit des Teiges bewirkt als das diesem Paar vorangehende Paar von Ausrollwalzen. Die Fördergeschwindigkeit des Teigs nimmt also von Paar zu Paar zu. Dadurch wird vermieden, dass der Teig beim Ausrollen zu sehr in die Breite geht und schließlich die axialen Enden der Ausrollwalzen erreicht. Durch die erhöhte Fördergeschwindigkeit kann der Teig schneller abtransportiert werden, so dass sich keine Ausdehnung in die Breite sondern vielmehr eine Ausdehnung in Förderrichtung ergibt. Der Teig kann damit bei relativ konstanter Breite ausgerollt werden, d.h. seine Dicke kann bei relativ konstanter Breite verringert werden.

Verschiedene Fördergeschwindigkeiten können dadurch bewirkt werden, dass die Ausrollwalzen aufeinanderfolgender Paare zwar gleich schnell angetrieben werden, jedoch einen in Förderrichtung zunehmenden Durchmesser aufweisen. Auch ist es möglich, die Ausrollwalzen von in Förderrichtung nachfolgenden Paaren schneller anzutreiben, um die Fördergeschwindigkeit zu erhöhen. Beides kann selbstverständlich auch kombiniert werden.

Mit einer derartigen Vorrichtung kann Teig effektiv verarbeitet werden, da insbesondere das Schneiden des Teiges, das regelmäßig manuell erfolgt, automatisiert durchgeführt werden kann. Die zur Verarbeitung des Teigs benötigte Zeit und der Arbeitsaufwand können somit verringert werden. Des Weiteren kann die Vorrichtung kompakt und platzsparend ausgestaltet sein, da die Schneidvorrichtung in die Ausrolleinrichtung integriert ist. Diese Integration kann insbesondere dadurch erfolgen, dass ein Element der Schneidvorrichtung, wie z.B. die Schneidelemente, mit einem Element der Ausrolleinrichtung, wie z.B. einer Ausrollwalze, zusammenwirkt. Es kann damit eine kompakte, kostengünstige und effektive Teigverarbeitungsvorrichtung bereitgestellt werden. Insbesondere kann die Schneidvorrichtung derart funktional in die Ausrolleinrichtung integriert sein, dass ein Element der Ausrolleinrichtung, das den Teig ausrollt, mit einem Element der Schneidvorrichtung, das den Teig schneidet, zusammenwirkt.

Die Schneidelemente wirken mit einer Walze der Ausrolleinrichtung zusammen, um den Teig zu schneiden. Die Walze kann damit sowohl eine Funktion für die Ausrolleinrichtung als auch eine Funktion für die Schneidvorrichtung übernehmen, so dass eine kompakte und kostengünstige Ausgestaltung erreicht wird.

Die Schneidelemente können ebenfalls auf einer Walze vorgesehen sein, oder sie können ortsfest angebracht sein, wobei der Teig beispielsweise mittels der Walze an den Schneidelementen vorbeitransportiert wird. Das Zusammenwirken kann dadurch erfolgen, dass der Teig zwischen der Walze und den Schneidelementen hindurchgefördert wird, z.B. durch Drehen der Walze. Vorzugsweise berühren die Schneidelemente die Walze und rollen insbesondere auf dieser ab. Die Schneidelemente können sich beispielsweise drehen und somit den Teig fördern bzw. die Förderung des Teiges unterstützen. Es sind auch Ausführungsformen denkbar, bei denen die Schneidelemente die Walze nicht berühren, sondern von dieser beabstandet sind, vorzugsweise mit einem Abstand, der deutlich kleiner ist als die Höhe der Schneidelemente.

Bei einer Ausführungsform weist die Schneidvorrichtung eine Schneidwalze auf, wobei die Schneidelemente als ringförmig umlaufende Elemente auf der Schneidwalze ausgebildet sind. Die Schneidelemente können z.B. als ringförmig umlaufende, konzentrisch angeordnete Erhebungen ausgebildet sein, insbesondere als konzentrische Schneidmesser. Somit kann ein kontinuierliches und effektives Schneiden des Teiges erzielt werden.

Die Schneidwalze und die Schneidelemente können einstückig ausgebildet sein. Sie können insbesondere aus einem Stück Material gefertigt sein, z.B. durch ein oder mehrere spanende Verfahren wie Drehen oder Fräsen. Beispielsweise kann die Schneidwalze mit den Schneidelementen durch Drehen und anschließendes Fräßen hergestellt werden. Es ist jedoch auch möglich, die Schneidelemente separat herzustellen und auf der Schneidwalze zu montieren, z.B. wenn die Schneidelemente und die Schneidwalze aus verschiedenen Materialien hergestellt werden sollen.

Bei einer vorteilhaften Ausgestaltung weist die Schneidwalze zumindest zwischen den Schneidelementen einen polygonalen Querschnitt auf. Durch einen derartigen Querschnitt kann ein verbessertes Ablösen des Teiges von der Schneidwalze erzielt werden.

Vorzugsweise ist der Querschnitt mindestens ein pentagonaler oder hexagonaler Querschnitt. Übergänge zwischen den entsprechenden Flächen der Schneidwalze, die den Kanten des Polygons entsprechen, sind vorzugsweise abgerundet oder angefast. Somit ist eine weitere Verbesserung des Ablöseverhaltens des Teigs erzielbar.

Die Ausrolleinrichtung umfasst zwei Walzenpaare. Durch das Ausrollen mit diesen Walzen wird die Dicke des Teiges verringert. Weiterhin weist die Schneidvorrichtung eine Schneidwalze auf, wobei die Schneidelemente als ringförmig umlaufende Elemente auf der Schneidwalze ausgebildet sind. Eine Walze der Ausrolleinrichtung und die Schneidwalze sind derart benachbart angeordnet, dass die Schneidelemente der Schneidwalze mit der Walze der Ausrolleinrichtung zum Schneiden des Teigs zusammenwirken. Dabei ist die Teigverarbeitungsvorrichtung derart ausgestaltet, dass die Drehrichtung der Schneidwalze und die Drehrichtung der Walze der Ausrolleinrichtung gegenläufig sind, so dass der Teig zwischen der Schneidwalze und der Walze der Ausrolleinrichtung in der Förderrichtung gefördert wird. Insbesondere ist die Ausgestaltung derart, dass der Teig in direktem Kontakt mit der Walze der Ausrolleinrichtung und der Schneidwalze kommt, wenn der Teig durch den Spalt zwischen diesen beiden Walzen gefördert und dabei geschnitten wird. Ausrollen des Teigs bedeutet insbesondere, dass der Teig mit einer Rolle bzw. Walze bearbeitet und in eine flache Form gebracht wird. Die Walze der Ausrolleinrichtung wirkt vorzugsweise mit einer weiteren Walze der Ausrolleinrichtung zusammen, um den Teig auszurollen, d.h. die Walze wirkt sowohl mit der weiteren Walze der Ausrolleinrichtung als auch mit der Schneidwalze zusammen.

Die Schneidvorrichtung kann mindestens drei Schneidelemente, vorzugsweise mindestens 5 Schneidelemente, aufweisen. Beispielsweise können 3, 4, 5, 6, 7, 8, 9 oder 10 Schneidelemente vorgesehen sein. Besonders bevorzugt sind 7 Schneidelemente vorhanden. Der Abstand zwischen Schneidelementen kann z.B. zwischen 1 cm und 6 cm, bevorzugt zwischen 2,5 cm und 4,5 cm betragen. Der Abstand kann insbesondere in Abhängigkeit von der zu erzielenden Streifenbreite eingestellt werden. Für die Herstellung von Baumstriezeln wird ein Abstand zwischen 3 cm und 3,5 cm bevorzugt. Die Abstände zwischen Schneidelementen können gleich sein.

Bei einer Ausführungsform weisen die Schneidelemente zum Schneiden des Teiges eine Schneidkante auf. Die Schneidkante kann z.B. einen Schneidenwinkel von weniger als 90°, insbesondere einen Schneidenwinkel zwischen 45° und 90° aufweisen. Damit kann Teig effektiv geschnitten werden, und die Abnutzung der Schneidelemente kann gering gehalten werden. Dies ist insbesondere bei aus Kunststoff gefertigten Schneidelementen vorteilhaft.

Vorzugsweise weisen die Schneidelemente eine Breite auf, mit der die Teigstreifen derart voneinander getrennt werden, dass sich die Teigstreifen nach dem Schneiden nicht wieder verbinden. Die Schneidelemente können eine Basis aufweisen, an der sie befestigt sind (insbesondere an der Schneidwalze), wobei die Basis eine Breite von mindestens 1 mm, vorzugsweise mindestens 1,5 mm oder 2mm aufweist. Die Breite der Basis kann beispielsweise zwischen 2 und 4 mm betragen, vorzugsweise 3 mm. Damit ist ein effektives Trennen der Teigstreifen möglich.

Die Schneidelemente können eine Höhe zwischen 5 und 10 mm aufweisen, vorzugsweise zwischen 7 und 9 mm, z.B. 8 mm. Somit lassen sich Teige ausreichender Höhe effizient schneiden

Die Ausrollwalzen der Ausrolleinrichtung sind derart angeordnet, dass der Teig die Ausrolleinrichtung in vertikaler Richtung nach unten durchläuft. Mit einer solchen Anordnung kann die Förderung des Teigs durch die Vorrichtung hindurch durch Schwerkraft unterstützt werden. Insbesondere lässt sich so eine Förderung realisieren, die weniger komplex ist als eine horizontale Förderung und die ohne zusätzliche Förderbänder auskommt.

Die Ausrolleinrichtung weist mehrere Paare von Ausrollwalzen auf, die der Teig während der Verarbeitung nacheinander durchläuft, wobei der Abstand, mit dem die Ausrollwalzen eines Paares beabstandet sind, in Förderrichtung des Teiges abnimmt. Somit kann die Dicke des Teiges stufenweise verringert werden und ein gleichmäßig ausgerollter Teig erhalten werden.

Die Ausrolleinrichtung weist mindestens zwei Paare, vorzugsweise mindestens 3 Paare von Ausrollwalzen auf, die der Teig während der Verarbeitung durchläuft. Bei einer Ausführungsform wirken die Schneidelemente mit einer Ausrollwalze des letzten vom Teig durchlaufenen Paares von Ausrollwalzen zusammen. Der Teig kann somit unmittelbar nach dem letzten Ausrollschritt geschnitten werden, was ein effektives Schneiden ermöglicht und insbesondere bewirkt, dass die Trennung der resultierenden Streifen erhalten bleibt.

Der Durchmesser der Ausrollwalzen kann beispielsweise zwischen 40 mm und 70 mm betragen, vorzugsweise zwischen 50 mm und 60 mm, z.B. 50 mm, 54 mm oder 55 mm. Die Oberfläche einer oder aller Ausrollwalzen kann mit einer Vielzahl umlaufenden Riefen versehen sein. Diese Riefen haben vorzugsweise einen Abstand von weniger als 1 mm und eine Tiefe von weniger als 1 mm. Mit einer derartigen Oberfläche kann das Ablösen des Teiges von den Ausrollwalzen verbessert werden. Beispielsweise haben die Riefen einen Abstand von ungefähr 0,5 mm und eine Tiefe von ungefähr 0,1 mm, wobei auch andere Dimensionierungen möglich sind.

Vorzugsweise ist die Oberfläche der Ausrollwalzen glatt. Glatt bedeutet dabei im Wesentlichen glatt, d.h. die Oberfläche kann selbstverständlich die durch das Herstellungsverfahren der Ausrollwalzen bedingten Unebenheiten aufweisen.

Die Ausrollwalzen und/oder die Schneidwalze sind vorzugsweise aus Kunststoff gefertigt. Insbesondere können die Ausrollwalzen und/oder die Schneidwalze aus Polyoxymethylen (POM) oder Teflon gefertigt sein. Derartige Materialien lassen sich leicht verarbeiten, sind kostengünstig und mit Lebensmitteln kompatibel. Insbesondere kann durch Verwendung derartiger Materialien eine Anhaftung des Teiges an den Ausrollwalzen und/oder der Schneidwalze vermieden werden.

Bei einer Ausführungsform weist die Teigverarbeitungsvorrichtung des Weiteren mindestens eine, vorzugsweise zwei Führungswalzen auf. Die Führungswalzen sind ausgestaltet, um den Teig nach dem Schneiden des Teiges aufzunehmen und den geschnittenen Teig einer Fördervorrichtung zuzuführen. Es kann beispielsweise ein Förderband zum Abtransport der Teigstreifen vorgesehen sein. Die Führungswalzen sind vorzugsweise aus Edelstahl gefertigt, können jedoch auch aus Kunststoff, wie den oben genannten, gefertigt sein. Mit derartigen Führungswalzen kann verhindert werden, dass der Teig nach dem Schneiden wieder an der Schneidwalze anklebt, z.B. aufgrund einer vorhandenen Krümmung des Teiges. Eine zweite Führungswalze kann gleichermaßen das Anhaften des Teiges an der ersten Führungswalze verhindern.

Bei anderen Ausführungsformen sind diese Führungswalzen jedoch nicht vorgesehen, sondern der geschnittene Teig wird direkt einer Fördervorrichtung oder einer Aufnahmevorrichtung zugeführt. Derartige Ausführungsformen sind bevorzugt, da die Komplexität der Teigverarbeitungsvorrichtung reduziert werden kann und die Gefahr eines Anhaftens des Teigs an den Führungswalzen vermieden wird.

Die Ausrolleinrichtung weist mindestens zwei Paare von Ausrollwalzen auf, die der Teig während der Verarbeitung nacheinander durchläuft und die den Teig in einer Förderrichtung fördern. Mindestens eine, vorzugsweise jede Ausrollwalze eines Paares kann mittels einer Kette oder eines Riemens, insbesondere derselben Kette oder desselben Riemens, angetrieben werden. Diese können Teil der Teigverarbeitungsvorrichtung sein.

Bei einer beispielhaften Ausgestaltung ist die angetriebene Ausrollwalze mit einem angetriebenen Rad in Form eines Kettenrads verbunden, das von der Kette angetrieben wird. Das Kettenrad bzw. die Kettenräder eines in Förderrichtung des Teiges nachfolgenden Paares von Ausrollwalzen weist dabei eine geringere Zahnzahl auf als das Kettenrad bzw. die Kettenräder des diesem Paar vorangehenden Paares von Ausrollwalzen. Die Kettenräder können mit derselben Kette angetrieben werden. Somit kann auf einfache und effektive Weise die Fördergeschwindigkeit von nachfolgenden Paaren von Ausrollwalzen erhöht werden. Vorzugsweise ist für jede Ausrollwalze ein angetriebenes Kettenrad vorgesehen.

Bei einer anderen beispielhaften Ausgestaltung ist die angetriebene Ausrollwalze mit einem angetriebenen Rad in Form einer Riemenscheibe verbunden, die von dem Riemen angetrieben wird, wobei die Riemenscheibe(n) eines in Förderrichtung des Teiges nachfolgendes Paares von Ausrollwalzen einen geringeren Umfang aufweisen als die Riemenscheibe(n) des diesem Paar vorangehenden Paares von Ausrollwalzen. Auch bei dieser Ausgestaltung kann die Fördergeschwindigkeit auf effektive Weise erhöht werden.

Bei einer Ausführungsform weist die Ausrolleinrichtung mindestens ein erstes, ein zweites und ein drittes Paar von Ausrollwalzen auf, die der Teig während der Verarbeitung nacheinander durchläuft und die den Teig in einer Förderrichtung fördern. Die Ausrollwalzen des ersten Paares werden mittels eines Kettenrads angetrieben, das eine Zahnzahl zwischen 14 und 16 aufweist. Die Ausrollwalzen des zweiten Paares werden mittels eines Kettenrads angetrieben, das eine Zahnzahl zwischen 12 und 14 aufweist. Die Ausrollwalzen des dritten Paares werden mittels eines Kettenrads angetrieben, das eine Zahnzahl zwischen 10 und 12 aufweist. Bei einer derartigen Ausgestaltung lässt sich die Fördergeschwindigkeit des Teiges auf effektive Weise derart erhöhen, dass die Verbreiterung des Teigs während des Ausrollens beschränkt oder sogar unterbunden wird.

Die Kettenräder können von einem Motor mittels einer (derselben) Kette angetrieben werden. Der Motor kann ausgestaltet sein, um eine Drehzahl zwischen 20 und 40 Umdrehungen pro Minute, vorzugsweise zwischen 24 und 32 Umdrehungen pro Minute bereitzustellen. Der Motor ist vorzugsweise ausgestaltet, um ein Drehmoment zwischen 30 und 50 Nm bereitzustellen, vorzugsweise zwischen 35 und 40 Nm. Die Ausrollwalzen jedes Paares können einen Durchmesser zwischen 40 und 60 mm, vorzugsweise zwischen 45 und 55 mm aufweisen. Als Antriebsrad, das vom Motor mit entsprechender Drehzahl angetrieben wird und das die Kette antreibt, kann ein Kettenrad mit einer Zahnzahl zwischen 10 und 20 vorgesehen sein.

Bei einer Ausführungsform sind die Ausrollwalzen und/oder die Schneidwalze mit einem Motor gekoppelt und von dem Motor aktiv antreibbar. Zum Beispiel können von mehreren Paaren von Ausrollwalzen jeweils eine oder beide Ausrollwalzen angetrieben sein. Vorzugsweise werden die Ausrollwalzen und die Schneidwalze vom selben Motor angetrieben, es sind jedoch auch Ausgestaltungen mit mehreren Motoren denkbar. Die Teigverarbeitungsvorrichtung kann den oder die Motoren umfassen. Die Kopplung kann z.B. mittels einer Kette oder eines Riemens (z.B. Zahnriemen) erfolgen. Durch den Antrieb der Walzen kann eine effiziente Förderung des Teiges durch die Vorrichtung sowie ein zügiges und effektives Ausrollen und Schneiden des Teigs erreicht werden.

Vorzugsweise sind die Schneidelemente der Schneidvorrichtung auf einer Schneidwalze vorgesehen, die angetrieben ist. Beispielsweise kann die Schneidwalze von derselben Kette oder demselben Riemen angetrieben werden, wie die Ausrollwalzen der Ausrolleinrichtung. Bei einer Ausführungsform ist die Schneidwalze mit einem angetriebenen Rad in Form eines Kettenrads verbunden. Dieses weist vorzugsweise dieselbe Zahnzahl auf wie das Kettenrad, mit dem die Ausrollwalze angetrieben wird, die mit den Schneidelementen der Schneidwalze zum Schneiden des Teiges zusammenwirkt. Es ist somit möglich, den äußeren Umfang der Schneidwalze derart mit dem Umfang dieser Ausrollwalze abzugleichen, dass ähnliche Umfangsgeschwindigkeiten für einen vorteilhaften Transport des Teiges erzielt werden. Alternativ kann der äußere Umfang der Schneidelemente mit dem Umfang der Ausrollwalze abgeglichen werden.

Jede Ausrollwalze und/oder die Schneidwalze kann eine Schutzkappe aufweisen, die an einem Ende der Walze vorgesehen ist. Vorzugsweise sind zwei Schutzkappen angebracht, eine an jedem Ende der Walze. Die Schutzkappe hat einen äußeren Durchmesser, der größer ist als der äußere Durchmesser der Walze. Die Schutzkappe bildet insbesondere einen Abschluss zu einer Wandung, an der die jeweilige Walze aufgehängt ist. Durch den größeren Durchmesser kann vermieden werden, dass sich Teig beim Ausrollen bzw. Schneiden in Richtung der Wandung ausbreitet. Die Schutzkappe kann ausgestaltet sein, um eine Verschraubung der Walze auf einer Welle abzudecken und ein Lösen dieser Verschraubung zu verhindern. Insbesondere kann eine solche Schutzkappe verhindern, dass eine Schraube, die sich gelöst hat, in den Teig fällt.

Die Schneidwalze kann beispielsweise an ihrem Rand (z.B. zwischen dem letzten Schneidelement und dem Ende der Schneidwalze) einen kreisförmigen Querschnitt ausweisen. Auf diesen Rand kann die Schutzkappe montiert werden, z.B. durch einen Presssitz. Die Schutzkappen auf der Schneidwalze können eine andere Form aufweisen als die Schutzkappen auf den Ausrollwalzen.

Zusätzlich oder alternativ zu den Schutzkappen an beiden oder einem Ende der Walzen (Ausrollwalzen und/oder Schneidwalze) ist am Ende der Walze die Welle der Walze durch eine Zwischenwand geführt, die innerhalb des Gehäuses bzw. der Außenwand (Außenwandung) angeordnet ist (sind). Die Zwischenwand an einer oder beiden Seiten der Walze ist beabstandet zur jeweiligen Außenwand angeordnet, so dass zwischen der Innenwand und der Zwischenwand (an einer oder beiden Seiten) ein Zwischenraum entsteht. Teigreste oder Mehl, die beim Auswalzen des Teigs zur Walzenseite gedrückt werden, können dann durch den Spalt zwischen Walze und Zwischenwand bzw. durch den Spalt zwischen Walzenwelle und Zwischenwand hindurchtreten und können dort im Zwischenraum nach unten fallen. Eine Verunreinigung der Wellenlager wird dadurch vermieden oder weitgehend verhindert.

Vorteilhaft sind die Lager der Wellenlager (zusätzlich) mittels jeweils eines Simmerrings je Lager gegen Verunreinigungen geschützt.

Bei weiteren Ausführungsformen der vorliegenden Erfindung ist die Schneidvorrichtung optional. Die Teigverarbeitungsvorrichtung kann also beispielsweise nur zum Ausrollen des Teiges mit der Ausrolleinrichtung ausgestaltet sein. Eine derartige Teigverarbeitungsvorrichtung kann sämtliche Merkmale einzeln oder in Kombination aufweisen, die hierin in Bezug auf die Ausrolleinrichtung beschrieben sind.

Bei einer Ausführungsform ist die Teigverarbeitungsvorrichtung eine Vorrichtung zur Verarbeitung von Striezel-Teig zur Herstellung von Baumstriezel.

Gemäß einem weiteren Aspekt der vorliegenden Erfindung wird ein Verfahren zur Verarbeitung eines Teiges bereitgestellt. Das Verfahren umfasst das Zuführen des Teiges zu einer Ausrolleinrichtung einer Teigverarbeitungsvorrichtung, die gemäß einem der vorab beschriebenen Ausführungsbeispiele ausgestaltet ist. Das Verfahren umfasst des Weiteren das Ausrollen und Schneiden des Teiges mittels der Teigverarbeitungsvorrichtung.

Mit einem derartigen Verfahren können ähnliche wie die vorab mit Bezug auf die Teigverarbeitungsvorrichtung beschriebenen Vorteile verwirklicht werden. Insbesondere kann die Verarbeitung des Teiges schnell, effektiv und kostengünstig erfolgen. Aufgrund der Ausgestaltung der Ausrolleinrichtung und der Schneidvorrichtung kann des Weiteren ein Anhaften des Teiges vermieden werden, sowie ein Verkleben der geschnittenen Teigstreifen.

Selbstverständlich können die Merkmale der vorab beschriebenen Ausführungsformen und Aspekte der vorliegenden Erfindung kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

### Kurze Beschreibung der Zeichnungen

Die Erfindung wird nachfolgend unter Bezugnahme auf die beiliegenden Zeichnungen näher erläutert. In den Zeichnungen kennzeichnen gleiche Bezugszeichen gleiche oder ähnliche Elemente.
- Fig. 1: ist eine schematische Zeichnung, die eine seitliche Schnittansicht einer Teigverarbeitungsvorrichtung gemäß einer Ausführungsform der vorliegenden Erfindung zeigt.
- Fig. 2: ist eine schematische Zeichnung, die eine frontale Schnittansicht einer Teigverarbeitungsvorrichtung gemäß einer Ausführungsform der vorliegenden Erfindung zeigt.
- Fig. 3: ist eine schematische Zeichnung, die eine Schnittansicht einer Schneidvorrichtung gemäß einer Ausführungsform der vorliegenden Erfindung zeigt.
- Fig. 4: ist eine schematische Zeichnung, die eine Schnittansicht der Schneidvorrichtung der Figur 3 entlang der Linie A-A zeigt.
- Fig. 5: ist eine schematische Zeichnung, die eine Seitenansicht einer Teigverarbeitungsvorrichtung gemäß einer Ausführungsform der vorliegenden Erfindung zeigt.
- Fig. 6: ist eine schematische Ansicht einer Abwandlung der Teigverarbeitungsvorrichtung, wobei im Vergleich zu der in Fig. 2 dargestellten anstelle von Schutzkappen Zwischenwände vorgesehen sind.

### Beschreibung beispielhafter Ausführungsformen

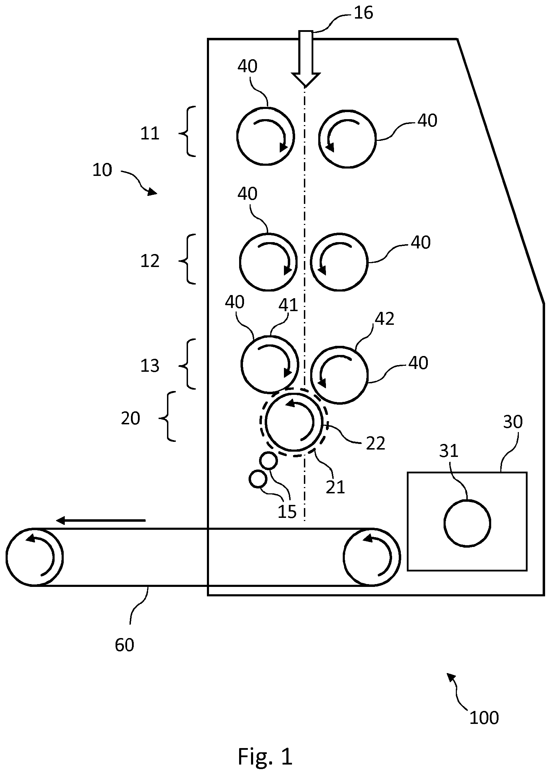

Fig. 1 zeigt beispielhaft eine Ausfuhrungsform einer erfindungsgemäßen Teigverarbeitungsvorrichtung 100. Die Teigverarbeitungsvorrichtung 100 weist eine Ausrolleinrichtung 10 und eine Schneidvorrichtung 20 auf. Die Ausrolleinrichtung 10 weist mehrere Paare 11, 12, 13 von Ausrollwalzen 40 auf. Eine oder beide Ausrollwalzen 40 eines Paares sind aktiv angetrieben, um den Teig durch die Teigverarbeitungsvorrichtung 100 zu fördern und auszurollen. Die Ausrollwalzen 40 eines Paares drehen sich in entgegengesetzte Richtung, wie mit Pfeilen angedeutet. Der Teig wird somit durch die Ausrollwalzen 40 hindurchgeführt und erhält eine Dicke, die durch den Abstand der Ausrollwalzen 40 des jeweiligen Paares bestimmt ist.

Die Ausrolleinrichtung 10 weist zwei Paare von Ausrollwalzen 40 auf, jedoch ist es vorteilhaft, wenn 3 oder mehr Paare von Ausrollwalzen 40 vorgesehen sind. Die aufeinanderfolgenden Walzenpaare 11, 12, 13 weisen vorzugsweise einen Abstand zwischen den Ausrollwalzen 40 eines Paares auf, der sich in Durchlaufrichtung des Teiges verringert. Somit kann die Dicke des Teiges durch aufeinanderfolgendes Ausrollen stufenweise verringert werden, wodurch ein gleichmäßig ausgerollter Teig erhalten werden kann und eine unregelmäßige Form sowie Risse im Teig vermieden werden können.

Die Ausrollwalzen 40 können einen Durchmesser zwischen 30 und 70 mm aufweisen. Bevorzugt sind Durchmesser zwischen 50 und 60 mm, z.B. 50, 54 oder 55 mm. Somit lassen sich insbesondere für Striezelteig gute Ergebnisse erzielen.

Die Oberflächen der Ausrollwalzen 40 können Riefen aufweisen, die in Umfangsrichtung konzentrisch und kontinuierlich verlaufen. Die Riefen haben vorzugsweise einen Abstand, der kleiner ist als 1 mm. Beispielsweise kann die Oberflächenstruktur der Ausrollwalzen 40 eine im Wesentlichen wellenförmige Struktur aufweisen (im Längsschnitt der Ausrollwalzen 40). Die Riefen sind vorzugsweise weniger als 1 mm tief, z.B. zwischen 0,05 und 0,5 mm. Bevorzugt ist eine Tiefe von ca. 0,1 mm. Durch diese Oberflächentextur kann verhindert werden, dass der Teig an den Ausrollwalzen 40 anhaftet.

Besonders bevorzugt ist es jedoch, wenn die Oberflächen der Ausrollwalzen 40 glatt sind und insbesondere keine zusätzlichen Rillen oder Riefen vorgesehen sind. Dadurch kann die Herstellung der Walzen vereinfacht werden, wobei gute Ergebnisse bezüglich der Anhaftung des Teigs erzielt werden.

Die Ausrollwalzen 40 können beispielsweise aus einem Stück Material durch spanende Umformung, wie Drehen, hergestellt werden. Bevorzugt sind die Ausrollwalzen 40 aus einem Kunststoff, insbesondere aus Polyoxymethylen (POM) oder Teflon gefertigt.

Die Paare von Ausrollwalzen 40 sind in der Teigverarbeitungsvorrichtung 100 in vertikaler Richtung übereinander angeordnet. Somit kann eine Förderung des Teiges durch die Teigverarbeitungsvorrichtung 100 von der Schwerkraft unterstützt werden. Des Weiteren kann ein kompakter Aufbau der Teigverarbeitungsvorrichtung 100 realisiert werden, insbesondere ist kein Förderband zum Zuführen des Teiges notwendig.

Die Schneidvorrichtung 20 weist mehrere (insbesondere 3 oder mehr) Schneidelemente 21 auf. Diese sind derart angeordnet, dass der Teig beim Durchlaufen der Teigverarbeitungsvorrichtung 100 in Längsstreifen geschnitten wird, d.h. es erfolgt ein Schneiden in einer Richtung, die parallel oder im Wesentlichen parallel zur Durchlaufrichtung des Teiges durch die Vorrichtung ist.

Im vorliegenden Ausführungsbeispiel sind die Schneidelemente 21 auf einer Schneidwalze 22 angeordnet. Die Schneidelemente können als ringförmige, umlaufende Erhebungen oder Grate ausgebildet sein. Vorzugsweise erstrecken sich diese kontinuierlich in Umfangsrichtung um die Schneidwalze 22. Es sind jedoch auch Ausführungen denkbar, bei denen die Schneidelemente Unterbrechungen in Umfangsrichtung aufweisen.

Bei anderen Ausführungsformen können die Schneidelemente auch auf einer stationären Komponente der Teigverarbeitungsvorrichtung 100 angeordnet sein, z.B. auf einem Führungselement, durch das oder über das der Teig gefördert wird, beispielsweise mittels einer oder mehrerer Ausrollwalzen 40 oder einer Führungswalze. Eine solche Anordnung vereinfacht den Aufbau, jedoch kann ein effizienteres Schneiden durch Verwenden einer Schneidwalze erzielt werden.

Die Schneidvorrichtung 20 ist in die Ausrolleinrichtung 10 integriert. Insbesondere ist die Schneidvorrichtung 20 unmittelbar benachbart zur Ausrolleinrichtung 10 angeordnet und wirkt mit einem Element dieser zusammen. Es wirken insbesondere ein Element der Ausrolleinrichtung 10, hier die Ausrollwalze 41, mit einem Element der Schneidvorrichtung 20, hier die Schneidelemente 21 bzw. die Schneidwalze 22, zusammen, um den Teig zu verarbeiten, insbesondere zu schneiden. Somit wird eine kompakte Bauweise erzielt und eine effiziente Verarbeitung des Teiges ermöglicht.

Die Ausrollwalze 41 und die Schneidwalze 22 können so beabstandet sein, dass ein weiteres Ausrollen des Teiges zwischen diesen Walzen erzielt wird. Vorzugsweise ist der Abstand zwischen den Flächen der Schneidwalze 22, die den Teig führen, und der Oberfläche der Ausrollwalze größer als der Abstand zwischen den Oberflächen der Ausrollwalzen 41, 42, so dass ein Anhaften des Teiges an die Schneidwalze 22 vermieden wird. Auch kann der Teig, der durch die Schneidelemente 21 verdrängt wird, somit besser aufgenommen werden.

Wie in Figur 1 dargestellt, dreht sich die Schneidwalze 22 vorzugsweise in die entgegengesetzte Richtung zu der Ausrollwalze 41, mit der sie zusammenwirkt, so dass der Teig zwischen den Walzen hindurchgefördert wird. Zu diesem Zweck ist es vorteilhaft, die Schneidwalze 22 aktiv anzutreiben.

Die Teigverarbeitungsvorrichtung 100 weist des Weiteren eine oder zwei Führungswalzen 15 auf. Die Führungswalzen 15 können ebenfalls aus Kunststoff gefertigt sein, insbesondere den vorab genannten. Vorzugsweise sind die Führungswalzen 15 aus Edelstahl gefertigt. Durch die Führungswalzen 15 kann vermieden werden, dass der Teig, der sich beispielsweise aufgrund der Verarbeitung mit Schneidwalze 22 krümmt, an der Schneidwalze 22 anhaftet. Die Führungswalzen 15 führen den Teig weg von der Schneidwalze 22 in Richtung einer Ausgabe der Teigverarbeitungsvorrichtung 100. Durch Vorsehen einer zweiten Führungswalze kann ein Anhaften des Teiges an der ersten Führungswalze verhindert werden. Nachdem der Teig die beiden Führungswalzen 15 passiert hat, weist der Teig in der Regel eine Form auf, die ein Anhaften an der zweiten Führungswalze 15 unwahrscheinlich macht.

Die Teigverarbeitungsvorrichtung 100 kann eine Fördereinrichtung 60 aufweisen, die den Teig aufnimmt, nachdem er die Führungswalzen 15 passiert hat. Die Fördereinrichtung 60 kann als Förderband ausgestaltet sein. Sie kann den ausgerollten und geschnittenen Teig einer weiteren Verarbeitung zuführen, oder kann den Teig zur weiteren manuellen Verarbeitung bereitstellen. Es sollte klar sein, dass bei anderen Ausführungsformen auch eine manuelle Entnahme oder direkte Weiterverarbeitung des Teiges nach der Schneidwalze 22 oder nach den Führungswalzen 15 erfolgen kann. Führungswalzen 15 und Fördereinrichtung 60 sind somit optional.

Bei einer vorteilhaften Ausgestaltung sind keine Führungswalzen 15 vorgesehen, sondern der Teig wird von der Schneidwalze 22 direkt einer Ausgabe der Vorrichtung 100 oder der Fördereinrichtung 60 zugeführt.

Die Teigverarbeitungsvorrichtung 100 weist des Weiteren einen Elektromotor 30 mit einem Antriebsrad 31 auf. Mit dem Motor 30 werden von jedem Paar 11, 12, 13 mindestens eine Ausrollwalze, vorzugsweise beide Ausrollwalzen angetrieben. Des Weiteren treibt der Motor 30 die Schneidwalze 22 an. Es sind selbstverständlich auch Ausführungen denkbar, bei denen mehrere Motoren zum Einsatz kommen und eine oder mehrere Walzen unmittelbar von einem zugeordneten Motor angetrieben werden.

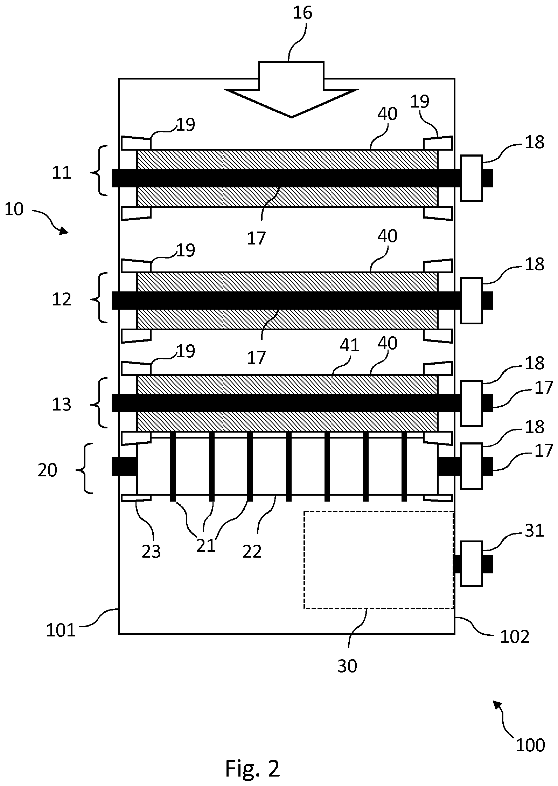

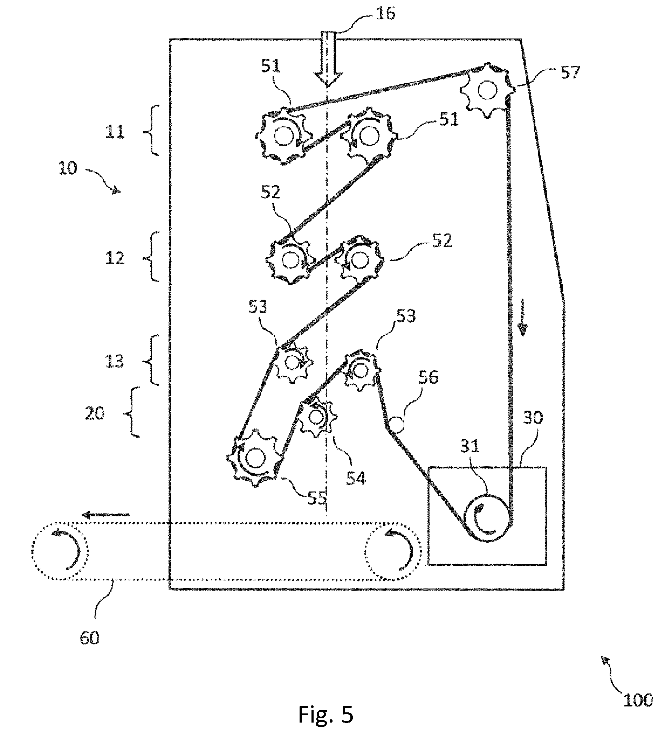

Figur 2 zeigt eine frontale Schnittansicht der Teigverarbeitungsvorrichtung 100 der Figur 1. Wie aus der Darstellung erkennbar ist sitzen die Auswollwalzen 40 und die Schneidwalze 22 auf Wellen 17, auf denen ein angetriebenes Rad 18, insbesondere ein Kettenrad oder Zahnrad montiert ist. Eine Kette kann von dem Antriebsrad 31 des Motors 30 um die angetriebenen Zahnräder 18 geführt werden, so dass sämtliche Ausrollwalzen 40 und die Schneidwalze 22 von dem Motor 30 angetrieben werden. Die Kette wird insbesondere so geführt, dass sich bei Betrieb des Motors die in Figur 1 dargestellten Drehrichtungen der Walzen einstellen. Wo nötig können zur Kettenführung entsprechende Umlenkrollen vorgesehen werden. Ein Beispiel ist nachfolgend mit Bezug auf Figur 5 genauer beschrieben. Es ist ebenfalls möglich, statt Zahnrädern und einer Kette einen Riemen, z.B. einen Zahnriemen oder ein Band sowie entsprechende Rollen zu verwenden.

Der Motor kann z.B. mit einer Drehzahl zwischen 30 und 50 Umdrehungen pro Minute, vorzugsweise ca. 40 oder 41 Umdrehungen pro Minute betrieben werden. Die Übertragung der Motorkraft kann ebenfalls mit einer Untersetzung oder Übersetzung erfolgen, um eine gewünschte Rotationsgeschwindigkeit der Walzen zu erzielen. Durch entsprechende Dimensionierung des Antriebsrads 31 und der jeweiligen angetriebenen Räder 18 können die Rotationsgeschwindigkeiten auch individuell eingestellt werden, z.B. in Abhängigkeit vom Walzendurchmesser. Der Motor 30 kann mit einem Ein/Ausschalter sowie einem Notschalter versehen sein. Bevorzugt ist der Motor im Innenraum zwischen den Wandungen 101, 102 angeordnet.

Die Ausrollwalzen 40 und die Schneidwalze 22 sowie die angetriebenen Räder 18 sind drehfest auf der jeweiligen Welle 17 montiert. Dies kann durch Nut/Feder Verbindung (z.B. Passfeder) oder Verschrauben erfolgen. Die Wellen 17 sind beispielsweise in Seitenwänden 101, 102 der Teigverarbeitungsvorrichtung 100 drehbar gelagert. Entsprechende Lager können in den Seitenwänden 101, 102 vorgesehen sein. Die Seitenwände 101, 102 können mittels Verbindungsstäben miteinander verbunden sein, oder es können weitere Wände vorgesehen werden.

Figur 5 zeigt eine Seitenansicht eines Ausführungsbeispiels, bei dem die angetriebenen Räder 18 als Kettenräder 51-54 ausgestaltet sind. Das erste Paar 11 von Ausrollwalzen 40 ist mit Kettenrädern 51 verbunden und wird von diesen angetrieben. Kettenräder 51 weisen beispielsweise 14-16 Zähne auf, vorzugsweise 15 Zähne. Das zweite Paar 12 von Ausrollwalzen 40 ist mit Kettenrädern 52 verbunden und wird von diesen angetrieben. Kettenräder 52 weisen beispielsweise 12-14 Zähne auf, vorzugsweise 13 Zähne. Das dritte Paar 13 von Ausrollwalzen 40 ist mit Kettenrädern 53 verbunden und wird von diesen angetrieben. Kettenräder 53 weisen beispielsweise 10-12 Zähne auf, vorzugsweise 11 Zähne. Kettenräder 51-53 werden von derselben Kette angetrieben. Somit kann auf einfache und effektive Weise die Geschwindigkeit der aufeinander folgenden Ausrollwalzen kontrolliert werden. Insbesondere nimmt die Drehgeschwindigkeit der Ausrollwalzen aufgrund der verringerten Zahnzahl in Förderrichtung des Teiges zu. Ein Ausrollen des Teiges ohne übermäßige Verbreiterung des Teiges wird somit ermöglicht.

Wie aus Figur 5 ersichtlich ist wird die Schneidwalze 22 ebenfalls von einem Kettenrad 54 angetrieben. Der Antrieb erfolgt vorzugsweise durch dieselbe Kette. Kettenrad 54 weist insbesondere dieselbe Zahnzahl auf wie die Kettenräder 53. Somit wird dieselbe Rotationsgeschwindigkeit der Ausrollwalzen des letzten Walzenpaares 13 und der Schneidwalze 22 erzielt. Durch Anpassen des Radius dieser Ausrollwalzen 40 und der Schneidwalze 22 lässt sich dieselbe Transportgeschwindigkeit (bzw. Umfangsgeschwindigkeit) einstellen, so dass der Teig beim Transport zwischen diesen Walzen keiner Scherung unterliegt.

Weiterhin sind Umlenk-Kettenräder 55 und 57 vorgesehen, die die Kette führen. Dadurch kann eine vorteilhafte Kettenführung erreicht werden, durch die sämtliche Kettenräder 51-54 mit derselben Kette angetrieben werden können. Die Kette ist dabei wie abgebildet derart geführt, dass die erwünschte Drehrichtung der Walzen erzielt wird. Kettenrad 55 weist eine größere Anzahl an Zähnen auf als die Kettenräder 53, wodurch ein Springen der Kette vermieden werden kann. Kettenrad 55 weist beispielsweise 15-20, vorzugsweise 18-19 Zähne auf. Die Vorrichtung 100 umfasst des Weiteren die Anlage bzw. Führung 56, die aus Kunststoff ausgebildet sein kann. Mit dieser Kunststoffanlage können Auslenkungen der Kette und ein Überspringen oder ein Herunterspringen der Kette verringert bzw. vermieden werden.

Die Kette wird mittels Motor 30 und Antriebsrad 31, das in der Ausführungsform der Figur 5 ebenfalls ein Kettenrad ist, angetrieben. Motor 30 ist ausgestaltet und wird derart betrieben, dass das Antriebsrad 31 im Betrieb mit einer Drehzahl von 20-40 Drehungen pro Minute rotiert. Es können beispielsweise 25 oder 31 Drehungen pro Minute eingestellt werden. Die Zahnzahl des Antriebsrads 31 und die Drehzahl des Motors 30 können derart aufeinander abgestimmt sein, dass die gewünschte Transportgeschwindigkeit des Teiges durch die Teigverarbeitungsvorrichtung 100 erzielt wird.

Besonders vorteilhaft ist es, wenn die Abstände zwischen den Ausrollwalzen des dritten, zweiten und ersten Paars 13, 12, 11 zueinander im Verhältnis 8:10:15 stehen. Darüber hinaus ist es vorteilhaft, wenn die Zahnzahlen der Kettenräder des dritten, zweiten und ersten Paares von Ausrollwalzen zueinander im Verhältnis 11:13:15 stehen. Damit kann ein effektives Ausrollen des Teiges gewährleistet werden.

Bei anderen Ausführungsformen kommen statt der Kettenräder Riemenscheiben und statt der Kette ein Riemen zum Einsatz, wobei oben gesagtes gleichermaßen für eine derartige Konfiguration gilt. Außerdem ist es möglich, statt Ketten oder Riemen Zahnräder für den Antrieb der Walzen einzusetzen, wobei auch hier entsprechende Verhältnisse zum Erzielen der gewünschten Rotationsgeschwindigkeiten der Walzen einstellbar sind.

Wie in der Schnittansicht der Figur 2 erkennbar ist weisen die Ausrollwalzen 40 Schutzkappen 19 an ihrem Ende auf, die einen Abschluss zur jeweiligen Seitenwand 101, 102 bilden. Die Schutzkappen 19 sind als umlaufende, ringförmige Elemente ausgeführt und vorzugsweise aus demselben Material wie die Ausrollwalzen 40 gefertigt. Die Schutzkappen minimieren den Spalt zwischen Seitenwand und Ausrollwalze und können somit die Wahrscheinlichkeit für ein Eindringen von Teig oder anderen Verunreinigungen in diesen Spalt vermindern. Des Weiteren weisen sie einen größeren äußeren Durchmesser als die Ausrollwalzen 40 auf, so dass der Teig während des Ausrollens im Wesentlichen zwischen den Schutzkappen verbleibt. Durch die angedeutete keilförmige Form der Schutzkappen 19 kann insbesondere bewirkt werden, dass der Teig beim Ausrollen von den Wänden 101, 102 ferngehalten wird. Weiterhin kann die Schutzkappe 19 eine Verschraubung zwischen Ausrollwalze 40 und Welle 17 überdecken und ggf. verhindern, dass sich diese Verschraubung löst. Sollte sich dennoch eine Verschraubung lösen, so verhindert die Schutzkappe 19, dass die Schraube herausfällt und insbesondere einen Teig verunreinigt, der mit der Teigverarbeitungsvorrichtung 100 verarbeitet wird.

Eine entsprechende Schutzkappe 23 kann auch auf der Schneidwalze 22 vorgesehen sein, mit entsprechenden vorteilhaften Wirkungen. Diese Schutzkappe kann jedoch anders geformt sein, z.B. mit einem kleineren Durchmesser, da mit der Schneidwalze 22 in der Regel kein Ausrollen des Teiges erfolgt und somit keine Gefahr besteht, dass sich der Teig in Richtung der Wandungen 101, 102 ausbreitet.

In Figur 2 sind ferner die auf der Schneidwalze 22 vorgesehenen umlaufenden Schneidelemente 21 sichtbar. Die Führungswalzen 15 und die Fördereinrichtung 60 sind nicht dargestellt, können aber selbstverständlich vorhanden sein.

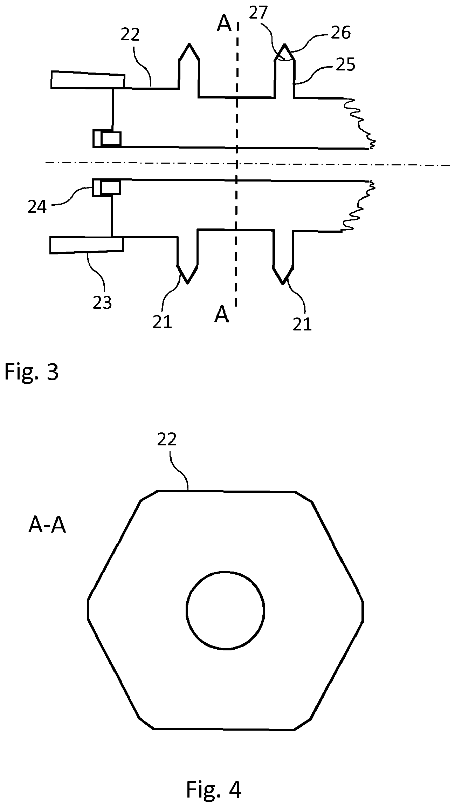

Figur 3 zeigt eine Schnittansicht eines Teils der Schneidwalze 22. Die Schneidwalze 22 kann an jedem Ende zylindrische Vorsprünge 24 aufweisen, mittels derer eine Verschraubung mit der Welle 17 erfolgen kann. Die Schneidelemente 21 können verschiedenen Formen aufweisen. Vorzugsweise haben sie eine gerade Basis 25, mit der sie auf der Schneidwalze 22 befestigt sind, sowie einen sich verjüngenden oberen Teil 26. Der obere Teil 26 läuft in dem Beispiel der Figur 3 spitz zu, um eine Schneidkante mit einem Schneidenwinkel 27 auszubilden. Da Teig in der Regel relativ einfach zu schneiden ist, kann der Schneidenwinkel 27 vergleichsweise groß sein, wodurch die Abnutzung der Schneidkante verringert wird. Der Schneidenwinkel liegt z.B. zwischen 110° und 45° und ist vorzugsweise größer als 60°. Bei anderen Ausführungsformen kann der obere Teil 26 auch eine andere Form aufweisen, z. B. eine Rundung oder ähnliches.

Die Höhe der Schneidelemente, gemessen von einem Bereich der Schneidwalze zwischen Schneidelementen, beträgt zwischen 5 und 15 mm, vorzugsweise 7 und 9 mm, z.B. ungefähr 8 mm. Somit lässt sich ein Teig entsprechender Dicke schneiden, ohne dass der Teig wesentlich verformt wird. Es sollte jedoch klar sein, dass die Höhe der Schneidelemente gemäß der jeweiligen Anwendung, insbesondere der Teigdicke, angepasst werden kann.

Die Breite der Schneidelemente 21 ist so gewählt, dass sich die Teigstreifen nach dem Schneiden nicht wieder verbinden. Die Breite kann z.B. zwischen 1 und 4 mm betragen, vorzugsweise zwischen 2 und 3 mm. Eine derartige Breite ist insbesondere für die Verarbeitung von Striezelteig vorteilhaft. Die Breite kann je nach Teigart und Teigdicke, die verarbeitet werden soll, angepasst werden.

Die Schneidwalze kann insbesondere in den Zwischenräumen zwischen Schneidelementen einen polygonalen Querschnitt aufweisen. Ein Querschnitt entlang der Linie A-A in Figur 3 ist in der Figur 4 dargestellt. In diesem Beispiel ist der Querschnitt hexagonal, es können jedoch auch andere Formen verwendet werden, wie z.B. ein pentagonaler, heptagonaler oder oktogonaler Querschnitt. Durch Verwendung eines derartigen Querschnitts kann das Ablösen des Teiges von der Schneidwalze 22 verbessert werden bzw. ein Anhaften des Teiges an der Schneidwalze 22 vermieden werden. Die Ränder der Schneidwalze 22 können einen kreisförmigen Querschnitt aufweisen, da an diesen Stellen bei der Verarbeitung kein oder nur wenig Teig vorhanden ist.

Wie aus Figur 4 ersichtlich ist können die Übergänge zwischen den Kanten des Polygons abgerundet oder angefast sein. Einerseits kann damit das Ablöseverhalten des Teiges weiter verbessert werden, andererseits lässt sich der Querschnitt damit ggf. leichter herstellen. Bei der in Figur 4 dargestellten Ausgestaltung der Schneidwalze 22 bemisst sich die Höhe der Schneidelemente von den angefasten Übergangsflächen.

Die Schneidwalze 22 und die Schneidelemente 21 sind vorzugsweise einstückig ausgebildet. Die Schneidwalze 22 einschließlich der Schneidelemente 21 kann z.B. durch Drehen aus einem Stück Material geformt werden. Zum Ausbilden des polygonalen Querschnitts zwischen den Schneidelementen können anschließend Teile des ursprünglich kreisförmigen Querschnitts weggefräst werden. Das Fräsen kann bis zu einer Tiefe erfolgen, in der die ursprüngliche Rundung als Übergänge zwischen den Teilflächen erhalten bleibt. Alternativ können die Übergänge zwischen den Teilflächen auch gefräst werden, so dass der in Figur 4 gezeigte Querschnitt erhalten wird.

Andere Herstellungsverfahren sind ebenfalls denkbar. Insbesondere können die Schneidwalze und die Schneidelemente auch separat hergestellt werden und anschließend miteinander verbunden werden.

Die Schneidwalze 22 ist in der Teigverarbeitungsvorrichtung 100 so angebracht, dass die Schneidelemente 21 die Ausrollwalze 41 berühren, ohne wesentlichen Druck auszuüben, und auf dieser abrollen. Somit kann der Teig durch die Walzen 22, 41 effektiv geschnitten und gefördert werden.

Bei einem Verfahren zur Verarbeitung von Teig mit der Teigverarbeitungsvorrichtung 100 wird dieser, wie in Figuren 1 und 2 durch Pfeil 16 angedeutet, vertikal zugeführt. Durch die aktiv angetriebenen Ausrollwalzen 40 wird der Teig schrittweise ausgerollt. Nach Durchlaufen des letzten Walzenpaares 13 trifft der Teig auf die Schneidwalze 22 und wird durch deren Drehung umgelenkt. Der Teig wird insbesondere in den Zwischenraum zwischen der Ausrollwalze 41 und der Schneidwalze 22 gezogen und dort mittels der Schneidelemente 21 in Streifen geschnitten. Nach Verlassen dieses Zwischenraumes wird der geschnittene Teig von den Führungswalzen 15 aufgenommen und auf die Fördereinrichtung 60 übertragen. Der geschnittene Teig wird von dieser zu einer Position transportiert, an der eine manuelle oder automatische Weiterverarbeitung des Teiges erfolgt. Es kann somit ein Ausrollen und Schneiden des Teiges in einem Arbeitsgang erfolgen. Des Weiteren werden aufgrund der Ausgestaltung der Schneidwalze 22 und der Schneidelemente 21 sauber getrennte Teigstreifen erhalten, die sich nicht mehr verkleben. Durch die vorab beschriebene Ausgestaltung der Teigverarbeitungsvorrichtung 100 kann des Weiteren ein Anhaften des Teiges an den Ausrollwalzen oder der Schneidwalze verhindert werden. Es wird somit eine effiziente und zuverlässige Verarbeitung des Teiges ermöglicht.

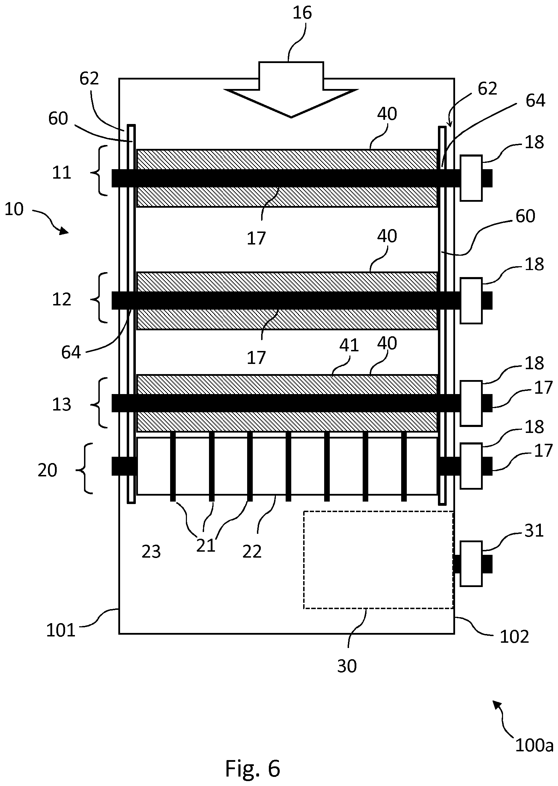

Fig. 6 zeigt in schematischer Vorderansicht eine Ausgestaltung der Teigverarbeitungsvorrichtung 100a. Im Vergleich zu der in Fig. 2 dargestellten Teigverarbeitungsvorrichtung sind bei dieser Ausgestaltung anstelle der Schutzkappen 19, 23 Zwischenwände 60 vorgesehen, die ein seitliches Abwandern von Teigresten, Mehl oder dergleichen in Richtung Wellenlager verhindert oder stark verringert. Die beschriebene Ausgestaltung ist bei allen Teigverarbeitungsvorrichtungen hierin anwendbar. Gleiche Bezugszeichen bezeichnen gleiche oder gleichwirkende wie zuvor beschriebene Elemente der Teigverarbeitungsvorrichtung.

An beiden Stirnseiten bzw. Enden der Ausrollwalzen und bevorzugt auch der Schneidewalze 22 sind die seitlich vorstehenden Wellenenden der Wellen 17 durch Öffnungen 64 in den Zwischenwänden 60 geführt. Die - wie dargestellt - linke Zwischenwand 60 ist durch Abstandselemente (nicht dargestellt) beabstandet zur linken Seitenwand 101 und die rechte Zwischenwand 60 ist beabstandet zur rechten Seitenwand 102 gehalten, so dass jeweils ein Zwischenraum 62 vorhanden ist. Zwischen Stirnwand jeder Walze 40, 22 und gegenüberliegender Fläche der Zwischenwand 60 ist ein Spalt vorgesehen und zwischen Umfang des Wellenendes 17 und der Innenseite der Öffnungen 64 ist ein Spalt vorgesehen, so dass sich die Walzen 40, 22 frei drehen können.

Gelangt beispielsweise Teigrest in die Spalte und wird dieser bei Betrieb in Richtung Zwischenraum transportiert, so fällt der Teigrest (oder andere Verunreinigungen) innerhalb des Zwischenraums nach unten. Damit wird verhindert, dass Verunreinigungen an die Wellenlager (nicht dargestellt) an den Seitenwänden 101, 102 gelangt. Die Zwischenwände 60 können beispielsweise 15 mm, 5 mm oder im Bereich von 5 bis 20 mm von der Seitenwand beabstandet sein, so dass sich eine entsprechende Breite des Zwischenraums 62 ergibt. Die Zwischenwände können aus Kunststoff ausgebildet sein und/oder eine Stärke im Bereich von 5 bis 15 mm, 7 bis 10 mm oder bevorzugt 8 mm aufweisen.

Die Seitenwände 101, 102 können bei den beschriebenen Teigverarbeitungsvorrichtungen 100, 100a Außenwände und damit Teil des Gehäuses sein. Oder eine oder beide Seitenwände 101, 102 können wiederum durch eine außen gelegene Gehäusewand (nicht dargestellt) umgeben bzw. umschlossen sein.

Zusammenfassend wird mit der vorliegenden Erfindung eine verbesserte Teigverarbeitungsvorrichtung bereitgestellt, die kompakt und kostengünstig ist und mit der eine effiziente und zuverlässige Verarbeitung eines Teiges erfolgen kann.

## Patentansprüche

1. Teigverarbeitungsvorrichtung, umfassend:
eine Ausrolleinrichtung (10) zum Ausrollen eines Teiges, der der Ausrolleinrichtung (10) zuführbar ist, und vorzugsweise
eine Schneidvorrichtung (20) zum Schneiden des Teiges, wobei die Schneidvorrichtung (20) in die Ausrolleinrichtung (10) integriert ist, und wobei die Schneidvorrichtung (20) mehrere Schneidelemente (21) aufweist, die derart voneinander beabstandet angeordnet sind, dass der Teig bei Förderung des Teigs durch die Teigverarbeitungsvorrichtung (100) in Förderrichtung in Streifen geschnitten wird,
wobei die Ausrolleinrichtung (10) mindestens zwei Paare von Ausrollwalzen (40) aufweist, die der Teig während der Verarbeitung nacheinander durchläuft und die den Teig in einer Förderrichtung fördern,
**dadurch gekennzeichnet, dass**
der Umfang der Ausrollwalzen und/oder ein Antrieb, der die Ausrollwalzen (40) antreibt, derart ausgestaltet sind bzw. ist, dass ein in Förderrichtung des Teigs nachfolgendes Paar von Ausrollwalzen eine höhere Fördergeschwindigkeit des Teiges bewirkt, als das diesem Paar vorangehende Paar von Ausrollwalzen.

2. Teigverarbeitungsvorrichtung nach Anspruch 1, wobei die Schneidelemente (21) mit einer Walze (41) der Ausrolleinrichtung (10) zusammenwirken, um den Teig zu schneiden.

3. Teigverarbeitungsvorrichtung nach Anspruch 1 oder 2, wobei die Schneidvorrichtung (20) eine Schneidwalze (22) aufweist, wobei die Schneidelemente (21) als ringförmig umlaufende Elemente auf der Schneidwalze (22) ausgebildet sind.

4. Teigverarbeitungsvorrichtung nach einem der vorstehenden Ansprüche, wobei die Schneidvorrichtung (20) eine Schneidwalze (22) aufweist, und wobei die Schneidwalze (22) und die Schneidelemente (21) einstückig ausgebildet sind.

5. Teigverarbeitungsvorrichtung nach Anspruch 3 oder 4, wobei die Schneidwalze (22) zumindest zwischen den Schneidelementen (21) einen polygonalen Querschnitt aufweist, vorzugsweise mindestens einen pentagonalen oder hexagonalen Querschnitt, wobei Übergänge zwischen den entsprechenden Flächen der Schneidwalze (22) vorzugsweise abgerundet oder angefast sind.

6. Teigverarbeitungsvorrichtung nach einem der vorstehenden Ansprüche, wobei die Schneidvorrichtung (20) mindestens drei Schneidelemente (21), vorzugsweise mindestens 5 Schneidelemente (21), insbesondere zwischen 4 und 10 Schneidelemente (21) aufweist.

7. Teigverarbeitungsvorrichtung nach einem der vorstehenden Ansprüche, wobei durch die mindestens zwei Walzenpaare der Ausrolleinrichtung (10) die Dicke des Teiges verringert wird, und wobei die Schneidvorrichtung (20) eine Schneidwalze (22) aufweist, wobei die Schneidelemente (21) als ringförmig umlaufende Elemente auf der Schneidwalze (22) ausgebildet sind, wobei eine Walze (41) der Ausrolleinrichtung (10) und die Schneidwalze (22) derart benachbart angeordnet sind, dass die Schneidelemente (21) der Schneidwalze (22) mit der Walze (41) der Ausrolleinrichtung (10) zum Schneiden des Teigs zusammenwirken, und wobei die Drehrichtung der Schneidwalze (22) und die Drehrichtung der Walze (41) der Ausrolleinrichtung (10) gegenläufig sind, so dass der Teig zwischen der Schneidwalze (22) und der Walze (41) der Ausrolleinrichtung (10) in der Förderrichtung gefördert wird.

8. Teigverarbeitungsvorrichtung nach einem der vorstehenden Ansprüche, wobei die Ausrollwalzen (40) der Ausrolleinrichtung (10) derart angeordnet sind, dass der Teig die Ausrolleinrichtung (10) in vertikaler Richtung nach unten durchläuft.

9. Teigverarbeitungsvorrichtung nach einem der vorstehenden Ansprüche, wobei der Abstand, mit dem die Ausrollwalzen (40) eines Paares (11, 12, 13) beabstandet sind, in Förderrichtung des Teiges abnimmt.

10. Teigverarbeitungsvorrichtung nach einem der vorstehenden Ansprüche, wobei die Ausrolleinrichtung (10) mindestens 2 oder 3 Paare von Ausrollwalzen aufweist, die der Teig während der Verarbeitung durchläuft, wobei die Schneidelemente (21) mit einer Ausrollwalze (41) des letzten vom Teig durchlaufenen Paares (13) von Ausrollwalzen zusammenwirken.

11. Teigverarbeitungsvorrichtung nach einem der vorstehenden Ansprüche, wobei mindestens eine, vorzugsweise jede Ausrollwalze eines Paares mittels einer Kette oder eines Riemens angetrieben wird, wobei die angetriebene Ausrollwalze vorzugsweise mit einem angetriebenen Rad in Form eines Kettenrads verbunden ist, das von der Kette angetrieben wird, wobei das Kettenrad bzw. die Kettenräder eines in Förderrichtung des Teiges nachfolgendes Paares von Ausrollwalzen eine geringere Zahnzahl aufweisen als das Kettenrad bzw. die Kettenräder des diesem Paar vorangehenden Paares von Ausrollwalzen.

12. Teigverarbeitungsvorrichtung nach einem der vorstehenden Ansprüche, wobei die Ausrollwalzen (40) mit einem Motor (30) gekoppelt sind und zur Förderung des Teiges von dem Motor aktiv antreibbar sind und /oder wobei die Schneidvorrichtung (10) eine Schneidwalze (22) aufweist, die mit einem Motor (30) gekoppelt ist und von dem Motor (30) aktiv antreibbar ist.

13. Teigverarbeitungsvorrichtung nach einem der vorstehenden Ansprüche,
wobei jede Ausrollwalze (40) eine Schutzkappe (19) aufweist, die an einem Ende der Ausrollwalze (40) vorgesehen ist und die einen äußeren Durchmesser hat, der größer ist als der äußere Durchmesser der Ausrollwalze (40), und/oder
wobei die Wellen (17) der Ausrollwalzen (40) und/oder der Schneidwalze (22) endenseitig an Seitenwänden (101, 102) gelagert sind, und wobei vorzugsweise beabstandet zu den Seitenwänden (101, 102) Zwischenwände (60) vorgesehen sind, so dass jeweils zwischen einer Seitenwand (101, 102) und einer Zwischenwand (60) ein Zwischenraum (64) ausgebildet ist.

14. Verfahren zur Verarbeitung eines Teiges, mit den folgenden Schritten:
- Zuführen des Teiges zu einer Ausrolleinrichtung (10) einer Teigverarbeitungsvorrichtung (100), die nach einem der vorstehenden Ansprüche ausgestaltet ist, und
- Ausrollen und Schneiden des Teiges mittels der Teigverarbeitungsvorrichtung (100).

## Claims

1. Dough processing apparatus, comprising:
a rolling assembly (10) for rolling a dough which is feedable to the rolling assembly (10), and preferably
a cutting assembly (20) for cutting the dough, wherein the cutting assembly (20) is integrated in the rolling assembly (10), and wherein the cutting assembly (20) includes a plurality of cutting elements (21) arranged distanced from each other such that the dough is cut into strips when the dough is conveyed through the dough processing apparatus (100) in conveying direction,
wherein the rolling assembly (10) includes at least two pairs of rolling rollers (40) through which the dough passes one after another during processing and which convey the dough in a conveying direction,
**characterized in that**
the circumference of the rolling rollers and/or a drive which drives the rolling rollers (40) are or is designed such that a pair of rolling rollers following in the conveying direction of the dough causes a higher conveying speed of the dough than the pair of rolling rollers preceding this pair.

2. Dough processing apparatus according to claim 1, wherein the cutting elements (21) engage with a roller (41) of the rolling assembly (10) to cut the dough.

3. Dough processing apparatus according to claim 1 or 2, wherein the cutting assembly (20) includes a cutting roller (22), wherein the cutting elements (21) are formed as annular circumferential elements on the cutting roller (22).

4. Dough processing apparatus according to one of the preceding claims, wherein the cutting assembly (20) comprises a cutting roller (22), and wherein the cutting roller (22) and the cutting elements (21) are formed as a single piece.

5. Dough processing apparatus according to claim 3 or 4, wherein the cutting roller (22) includes at least between the cutting elements (21) a polygonal cross-section, preferably at least a pentagonal or hexagonal cross-section, wherein transitions between the corresponding surfaces of the cutting roller (22) are preferably rounded or chamfered.

6. Dough processing apparatus according to any one of the preceding claims, wherein the cutting assembly (20) includes at least three cutting elements (21), preferably at least 5 cutting elements (21), in particular between 4 and 10 cutting elements (21).

7. Dough processing apparatus according to one of the preceding claims, wherein the thickness of the dough is reduced by the at least two pairs of rollers of the rolling assembly (10), and wherein the cutting assembly (20) includes a cutting roller (22), wherein the cutting elements (21) are formed as annular circumferential elements on the cutting roller (22), wherein a roller (41) of the rolling assembly (10) and the cutting roller (22) are arranged adjacent to each other such that the cutting elements (21) of the cutting roller (22) engage with the roller (41) of the rolling assembly (10) for cutting the dough, and wherein the direction of rotation of the cutting roller (22) and the direction of rotation of the roller (41) of the rolling assembly (10) are opposite, so that the dough is conveyed between the cutting roller (22) and the roller (41) of the rolling assembly (10) in the conveying direction.

8. Dough processing apparatus according to any one of the preceding claims, wherein the rolling rollers (40) of the rolling assembly (10) are arranged such that the dough passes through the rolling assembly (10) in vertical downward direction.

9. Dough processing apparatus according to any one of the preceding claims, wherein the distance with which the rolling rollers (40) of a pair (11, 12, 13) are distanced decreases in conveying direction of the dough.

10. Dough processing apparatus according to any one of the preceding claims, wherein the rolling assembly (10) includes at least 2 or 3 pairs of rolling rollers through which the dough passes during processing, wherein the cutting elements (21) engage with a rolling roller (41) of the last pair (13) of rolling rollers passed by the dough.

11. Dough processing apparatus according to one of the preceding claims, wherein at least one, preferably each, rolling roller of a pair is driven by means of a chain or a belt, wherein the driven rolling roller is preferably connected to a driven wheel in the form of a chain wheel driven by the chain, wherein the chain wheel(s) of a pair of rolling rollers following in the conveying direction of the dough have a lower tooth number than the chain wheel(s) of the pair of rolling rollers preceding this pair.

12. Dough processing apparatus according to any one of the preceding claims, wherein the rolling rollers (40) are coupled to a motor (30) and are actively drivable by the motor to convey the dough, and/or wherein the cutting assembly (10) includes a cutting roller (22) which is coupled to a motor (30) and is actively drivable by the motor (30).

13. Dough processing apparatus according to any of the preceding claims,
wherein each rolling roller (40) includes a protection cap (19) which is provided at one end of the rolling roller (40) and which has an outer diameter which is larger than the outer diameter of the rolling roller (40), and/or
wherein the shafts (17) of the rolling rollers (40) and/or of the cutting roller (22) are supported at their ends on side walls (101, 102), and wherein preferably intermediate walls (60) are provided at a distance from the side walls (101, 102), so that an intermediate space (64) is formed between a side wall (101, 102) and an intermediate wall (60) respectively.

14. Method for processing a dough, comprising the following steps:
- Feeding the dough to a rolling assembly (10) of a dough processing apparatus (100) that is configured according to one of the preceding claims, and
- Rolling and cutting the dough by means of the dough processing apparatus (100).

## Revendications

1. Dispositif de préparation de pâte, comprenant :
un dispositif d'étalement (10) pour étaler une pâte qui peut être amenée vers le dispositif d'étalement (10) et de préférence
un dispositif de coupe (20) pour couper la pâte, dans lequel le dispositif de coupe (20) est intégré dans le dispositif d'étalement (10), et dans lequel le dispositif de coupe (20) présente plusieurs éléments de coupe (21) qui sont disposés distants l'un de l'autre de telle sorte que la pâte, lorsque la pâte avance à travers le dispositif de préparation de pâte (100), est coupée en bandes dans le sens d'avancement,
dans lequel le dispositif d'étalement (10) présente au moins deux paires de rouleaux d'étalement (40) que la pâte traverse l'un après l'autre pendant le traitement et qui font avancer la pâte dans un sens d'avancement,
**caractérisé en ce que**
le pourtour des rouleaux d'étalement et/ou un entraînement qui entraîne les rouleaux d'étalement (40) est/sont ainsi conçu(s) qu'une paire suivante de rouleaux d'étalement dans le sens d'avancement de la pâte, produit une vitesse d'avancement plus élevée de la pâte que la paire de rouleaux d'étalement précédant cette paire.

2. Dispositif de préparation de pâte selon la revendication 1, dans lequel les éléments de coupe (21) coopèrent avec un rouleau (41) du dispositif d'étalement (10) pour couper la pâte.

3. Dispositif de préparation de pâte selon la revendication 1 ou 2, dans lequel le dispositif de coupe (20) présente un rouleau de coupe (22), dans lequel les éléments de coupe (21) sont conçus en tant qu'éléments périphériques annulaires sur le rouleau de coupe (22).

4. Dispositif de préparation de pâte selon l'une des revendications précédentes, dans lequel le dispositif de coupe (20) présente un rouleau de coupe (22), et dans lequel le rouleau de coupe (22) et les éléments de coupe (21) sont formés d'un seul tenant.

5. Dispositif de préparation de pâte selon la revendication 3 ou 4, dans lequel le rouleau de coupe (22) présente une section polygonale au moins entre les éléments de coupe (21), de préférence au moins une section pentagonale ou hexagonale, dans lequel des transitions entre les faces correspondantes du rouleau de coupe (22) sont de préférences arrondies ou chanfreinées.

6. Dispositif de préparation de pâte selon l'une des revendications précédentes, dans lequel le dispositif de coupe (20) présente au moins trois éléments de coupe (21), de préférence au moins 5 éléments de coupe (21), en particulier entre 4 et 10 éléments de coupe (21).

7. Dispositif de préparation de pâte selon l'une des revendications précédentes, dans lequel l'épaisseur de la pâte est réduite par les au moins deux paires de rouleaux du dispositif d'étalement (10), et dans lequel le dispositif de coupe (20) présente un rouleau de coupe (22), dans lequel les éléments de coupe (21) sont conçus en tant qu'éléments périphériques annulaires sur le rouleau de coupe (22), dans lequel un rouleau (41) du dispositif d'étalement (10) et le rouleau de coupe (22) sont ainsi disposés adjacents que les éléments de coupe (21) du rouleau de coupe (22) coopèrent avec le rouleau (41) du dispositif d'étalement (10) pour couper la pâte, et dans lequel le sens de rotation du rouleau de coupe (22) et le sens de rotation du rouleau (41) du dispositif d'étalement (10) sont contraires, de sorte que la pâte est avancée dans le sens d'avancement entre le rouleau de coupe (22) et le rouleau (41) du dispositif d'étalement (10).

8. Dispositif de préparation de pâte selon l'une des revendications précédentes, dans lequel les rouleaux d'étalement (40) du dispositif d'étalement (10) sont ainsi disposés que la pâte traverse le dispositif d'étalement (10) dans le sens vertical vers le bas.

9. Dispositif de préparation de pâte selon l'une des revendications précédentes, dans lequel l'écart avec lequel les rouleaux d'étalement (40) d'une paire (11, 12, 13) sont distants, se réduit dans le sens d'avancement de la pâte.

10. Dispositif de préparation de pâte selon l'une des revendications précédentes, dans lequel le dispositif d'étalement (10) présente au moins 2 ou 3 paires de rouleaux d'étalement, que la pâte traverse pendant le traitement, dans lequel les éléments de coupe (21) coopèrent avec un rouleau d'étalement (41) de la dernière paire (13) des rouleaux d'étalement traversée par la pâte.

11. Dispositif de préparation de pâte selon l'une des revendications précédentes, dans lequel au moins un, de préférence chaque, rouleau d'étalement d'une paire est entraîné par une chaîne ou une courroie, dans lequel le rouleau d'étalement entraîné est relié de préférence à une roue menée sous forme d'un pignon à chaîne qui est entraîné par la chaîne, dans lequel le pignon à chaîne, respectivement les pignons à chaîne, d'une paire de rouleaux d'étalement suivante dans le sens d'avancement de la pâte présente(nt) un nombre de dents plus réduit que le pignon à chaîne, respectivement les pignons à chaîne, de la paire de rouleaux d'étalement précédant cette paire.

12. Dispositif de préparation de pâte selon l'une des revendications précédentes, dans lequel les rouleaux d'étalement (40) sont couplés à un moteur (30) et peuvent être entraînés activement par le moteur pour faire avancer la pâte et/ou dans lequel le dispositif de coupe (10) présente un rouleau de coupe (22) qui est couplé à un moteur (30) et peut être entraîné activement par le moteur (30).

13. Dispositif de préparation de pâte selon l'une des revendications précédentes, dans lequel chaque rouleau d'étalement (40) présente un bouchon de protection (19) qui est prévu à une extrémité du rouleau d'étalement (40) et qui a un diamètre extérieur qui est plus grand que le diamètre extérieur du rouleau d'étalement (40), et/ou
dans lequel les arbres (17) des rouleaux d'étalement (40) et/ou du rouleau de coupe (22) sont disposés à l'extrémité sur des parois latérales (101, 102), et dans lequel sont prévues des parois intermédiaires (60) de préférence distantes des parois latérales (101, 102), de telle sorte qu'un espace intermédiaire (64) soit respectivement formé entre une paroi latérale (101, 102) et une paroi intermédiaire (60).

14. Procédé de préparation d'une pâte, comprenant les étapes suivantes :
- amenée de la pâte vers un dispositif d'étalement (10) d'un dispositif de préparation de pâte (100) qui est conçu selon les revendications précédentes, et
- étalement et découpe de la pâte au moyen du dispositif de préparation de pâte (100).
